# EUROPÄISCHE PATENTSCHRIFT

(11) **EP 1 804 095 B1**
(45) Veröffentlichungstag und Bekanntmachung des Hinweises auf die Patenterteilung: **14.04.2010**
(21) Anmeldenummer: 06126154.1
(22) Anmeldetag: 14.12.2006
(51) Int. Cl.: G02B 6/00, F21S 4/00

(54) **Faseroptische Vorrichtung für sekundäre Beleuchtungssysteme in Flugzeugkabinen**
Fibre-optic device for secondary illumination systems in aeroplane cabins
Dispositif à fibres optiques pour systèmes d'éclairage secondaires dans des cabines d'avion

(30) Priorität: 31.12.2005 DE 102005063208
(43) Veröffentlichungstag der Anmeldung: 04.07.2007
(73) Patentinhaber: Schott AG, 55122 Mainz (DE)
(72) Erfinder: Gaydoul, Ekkehard, 64401 Groß-Bieberau (DE)
(74) Vertreter: Schweiger, Martin

(56) Entgegenhaltungen:
- DE-A1- 3 214 732
- US-A- 5 647 658
- US-A1- 2005 265 038

## Beschreibung

Die Erfindung betrifft eine faseroptische Vorrichtung für sekundäre Beleuchtungssysteme in Flugzeugkabinen.

In den Passagierkabinen von Flugzeugen, insbesondere von Großraumflugzeugen, werden sekundäre Beleuchtungssysteme, welche im Gegensatz zur primären Beleuchtung wie Umgebungs- oder Leselicht, ausschließlich funktionellen und dekorativen Zwecken dienen, in unterschiedlichen Ausführungsformen realisiert. Die sekundäre Beleuchtung umfasst dabei zum einen die Punktbeleuchtung von dekorativen Innenraumelementen, Symbolen, Zeichen, Firmenlogos, Markierungen sowie einzelne Elemente von flächigen Lichtdarstellungen, wie bei einem an der Kabinendecke stilisierten Sternenhimmel oder sonstigen Decken- bzw. Wanddekorationen. Zum anderen dient sie als flächige Hinterleuchtung von Zeichen und Formen, beispielsweise Sitzplatznummern, oder als Linienbeleuchtung zur Akzentuierung von Kanten- oder Wegmarkierungen, wie beispielsweise bei Bodenleitsystemen zur Kennzeichnung von Fluchtwegen. Wegen der geringen Umgebungshelligkeit in Flugzeugkabinen sind hierfür Beleuchtungssysteme mit geringer Lichtstärke ausreichend.

Bei bekannten sekundären Beleuchtungssystemen sind entweder einzelne LEDs als Punktbeleuchtung oder LED-Gruppen als Linienlicht eingesetzt worden. Alternativ sind zum Beispiel mit LEDs beleuchtete Kunststofffasersysteme eingesetzt worden. Mit diesen Systemen sind linienförmigen Beleuchtungen, für z.B. Akzentuierung von Kanten oder Kennzeichnung von Fluchtwegen, oder flächenhafte Beleuchtungen, für z.B. Hinterleuchtung von Sitzplatznummern oder großflächige "Lichtstimmungen" an der Kabinendecke, realisiert worden.

Die im Flugzeugbau notwendige Optimierung von Verbauungsraum bei Hinterwandverbauung beispielsweise für Verkabelungen oder Halterungen sowie die Anforderungen an Brandschutz und Flammverhalten von Beleuchtungseinbauten und stromführenden Versorgungsleitungen in der Kabinenverkleidung führen zunehmend dazu, dass bestimmte Materialien oder lichterzeugende Techniken für die Verwendung im Flugzeugbau als gefährlich eingestuft werden und nicht verbaut werden dürfen. Auch machen zusätzliche Sicherheitsmaßnahmen, wie beispielsweise die Stegführung von stromführenden Kabeln oder von Leitungen aus bestimmten Kunststoffmaterialien aber auch die Sicherheitsbefestigung von LEDs auf Sockeln oder Halterungen, den Hinterwandeinbau in Flugzeugkabinen aufwendig und kostenintensiv.

Kunststofflichtleiter sind wegen ihres Aufbaus als Monofaser mit typischer Weise 1 mm Faserdurchmesser und des dadurch bedingten Biegeradius bei den schwierigen Einbauverhältnissen in der Flugzeugkabine nur begrenzt einsetzbar, da der hierfür erforderliche Raum für eine optimale Lichtverteilung und Lichtleitung beim Hinterwandeinbau in der Flugzeugkabine fehlt.

Insbesondere sind Kunststofflichtleiter nicht konform mit den Anforderungen von Brandschutznormen für Flugzeuge (z.B. JAR 25.869 (a) (4)), womit funktionelle als auch finanzielle Einschränkungen für Alternativen von sekundären Beleuchtungssystemen im Flugzeugbau einhergehen können.

Die US 2005/0265038 A1 offenbart ein Verbundstoffbauteil, das im Flugzeugbau für die Innenverkleidung von Flugzeugkabinen vorgesehen ist. Das Verbundstoffbauteil weist einen Wabenkern und zwei den Kern einschließende Deckschichten auf. In einer Deckschicht sind Beleuchtungsmittel eingelassen. Hierzu sind in der kabinenseitigen Deckschicht des Verbundstoffbauteils Durchgangsbohrungen und auf der entgegengesetzten Deckschicht Nuten als Maßnahmen zur Aufnahme von Kabeln eingearbeitet.

Als Kabel werden Lichtwellenleiter eingesetzt, welche an ihren einen Enden von einer Lichtquelle gespeist werden, wobei die anderen Enden durch Durchgangsbohrungen aus der kabinenseitigen Deckschicht geführt sind. Die Lichtwellenleiter werden ohne weiteres durch die Durchgangsbohrungen in der Deckschicht hindurch gesteckt und eventuelle Überstände der Kabel gegebenenfalls passend abgeschnitten.

Als Lichtwellenleiter werden PMMA-Fasern bevorzugt, deren mechanischer Schutz mit einer konventionellen Ummantelung verwirklicht ist. Die offenbarten Schutzummantelungen werden mittels Schläuchen oder sonstiger Überzüge verwirklicht.

Nachteilig wirkt sich dabei aus, dass die Biegefähigkeit des Lichtleiters durch die verwendeten PMMA-Fasern sowie die konventionelle Ummantelung der Fasern stets beeinträchtigt ist. Dieser Nachteil ist besonders bei PMMA-Fasern festzustellen. Insbesondere die in US 2005/0265038 A1 als Faserbündel oder Monofaser mit einer Dicke von 0,75 bis 1,5 mm beschriebene PMMA-Fasern benötigen auf Grund material bedingter Eigenschaften größere Biegeradien als Glasfasern. Aber auch bei Glasfaserbündel, welche mit einer konventionellen Ummantelung versehen sind, wie dies die US 2005/0265038 A1 beschreibt, sind Biegeradien erforderlich, welche konventionellen PMMA-Fasern in etwa gleichkommen. Damit werden für die Verbauung der Lichtwellenleiter nach US 2005/0265038 A1 stets große Biegeradien benötigt, was beim Innenausbau von Flugzeugkabinen unerwünscht ist.

Zusätzlich zu diesen Bauraum bezogenen Nachteilen fehlen PMMA-Fasern als auch Glasfaserbündeln mit konventioneller Ummantelung darüber hinaus Temperatur- und Flammstabilität. PMMA sowie die konventionelle Ummantelung setzt bei Hitze oder bei Feuer schädliche Emissionen frei. Dies gilt auch für die im Stand der Technik beschriebenen Klebstoffe zur Befestigung von Kabeln, Lichtwellenleitern oder Beleuchtungsmitteln.

Die US 5,647,658 beschreibt die Verwendung von Lichtleiterfasern und die Befestigung der Lichtleiterfasern in einem Flugzeug. Es werden als Lichtleitfaser sogenannte solid core type (Monofaser) oder multiple fiber core type (Multifaserkern) für den Einsatz vorgeschlagen. Es handelt sich dabei um Lichtleitfasern aus Kunststoff mit den für konventionelle Fasern beschriebenen Eigenschaften, nämlich einem Durchmesser von 0,5 bis 2,5 mm und entsprechend geringer Biegsamkeit.

Von Nachteil ist auch bei dieser bekannten Ausführung zum einen die damit einhergehenden großen Biegeradien, was zu einem Bedarf an erheblichen Bauraum für die Hinterwandverbauung führt sowie der Umstand, dass die Lichtleitfasern aus Kunststoff hergestellt sind, wobei Hitze die Lichtleiter schädigen kann.

Aufgabe der Erfindung ist es daher, die Nachteile des Standes der Technik zu überwinden, insbesondere eine kostengünstige Vorrichtung für die sekundäre Innenbeleuchtung in Flugzeugkabinen zur Verfügung zu stellen, welche sowohl den brandschutztechnischen Bestimmungen genügt als auch geringen Verbauungsraum für Leitungsführung, Lichtmontage sowie Lichtquellen erfordert und zudem einfach und sicher in bzw. hinter der Kabinenwand verbaubar ist.

Eine Lösung wird durch die Merkmale des Anspruchs 1 bereitgestellt. Erfindungsgemäße Ausführungsformen werden durch die Unteransprüche beschrieben.

Erfindungsgemäß bereitgestellt wird eine faseroptische Vorrichtung zur funktionellen und dekorativen Innenbeleuchtung von Flugzeugkabinen mit wenigstens einer zentralen Lichtquelle und wenigstens einem faseroptischen Lichtleitersystem mit Lichtleitern zur Leitung des Lichts von der Lichtquelle zum Beleuchtungsort, wobei die Lichtleiter lichteintrittsseitig zu einer mit der Lichtquelle korrespondierenden Lichtaufnahmefläche zusammengefasst sind und die Lichtleiter wenigstens ein Glasfaserbündel aufweisen, dessen Glasfasern mit ihren lichtaustrittsseitigen Enden eine Lichtaustrittsfläche bilden und die Lichtaustrittsfläche als Punktlicht, als Linienlicht oder als Flächenlicht vorgeformt ist.

Vorteil der Erfindung ist es, dass die Anzahl der aktiven stromverbrauchenden Lichtquellen in der Flugzeugkabine reduziert werden kann, da mehrere Beleuchtungsorte von einer zentralen Lichtquelle versorgt werden können, wobei die zentrale Lichtquelle außerhalb der Flugzeugkabine in besonders geschützten Bereichen des Flugzeugs angeordnet werden kann. Somit kann auf einen erheblichen Anteil stromführender Verkabelung in der Kabinenverkleidung verzichtet werden, für die besondere technische Brandschutzmaßnahmen erforderlich sind. Da Lichtleiter in ihrer Umgebung elektromagnetisch wirkungsfrei sind und somit ein elektromagnetischer Einfluss auf benachbarte stromführende Verkabelung unterbleibt, kann eine Verlegung der Lichtleiter an beliebigen Orten im Bereich der Wandverkleidung der Flugzeugkabine erfolgen.

Das Licht wird in vorteilhafter Weise am Beleuchtungsort in der Flugzeugkabine ohne Wärmeentwicklung ausgestrahlt, so dass auf besondere Maßnahmen für den Brandschutz bezüglich der Lichterzeugung am Beleuchtungsort verzichtet werden kann.

Mit der erfindungsgemäßen Vorrichtung sind einfach, kostengünstig und platzsparend Systeme punkt-, linien- oder flächenförmiger Beleuchtungen, wie zum Beispiel für Akzentuierung von Kanten oder Kennzeichnung von Fluchtwegen, Hinterleuchtung von Sitzplatznummern oder einzelne Elemente großflächiger "Lichtstimmungen" an der Kabinendecke realisierbar. Die Verwendung der erfindungsgemäßen Vorrichtung ermöglicht des Weiteren eine Optimierung von Verbauungsraum bei Hinterwandverbauung. Bei einer optimalen Verteilung der Beleuchtungsorte kann die diesbezügliche Verlegung der Lichtleiter platzsparend erfolgen.

Hierzu ist erfindungsgemäß vorgesehen, dass die Glasfasern an den lichtaustrittsseitigen Enden zu einem Lichtleitstab oder einer Leuchtplatte verpresst oder zu einem Gewebe verwoben sind. Damit ist es in vorteilhafter Weise möglich, dass die Lichtaustrittsfläche an die vorgesehene Lichtwirkung angepasst ist. So sind auf einfache Wiese Hinterleuchtungen durch flächenhafte Lichtausstrahlung möglich, welche durch Leuchtplatten und Leuchtgewebe realisiert wird. Linienbeleuchtung, wie sie bei Wege- oder Stufenmarkierungen üblich sind, können Seitenlichtfasern realisiert werden.

Hierzu ist erfindungsgemäß vorgesehen, dass die Glasfasern an den lichtaustrittsseitigen Enden seitenemittierende Eigenschaften aufweisen. Hierdurch wird eine linien- bzw. flächenhafte Lichtausstrahlung am Beleuchtungsort erreicht. Die Lichtausstrahlung erfolgt dabei gleichmäßig über die Seitenfläche der einzelnen Glasfasern des Lichtleiters. Bei verpressten oder verwobenen Enden der Lichtleiter, kann somit der flächenhafte Beleuchtungseffekt verstärkt werden.

Eine vorteilhafte Ausführungsform ist damit gefunden worden, dass die Glasfasern einen Durchmesser in Bereich zwischen 30 µm und 100 µm aufweisen, vorzugsweise 53 µm. Diese Glasfasern sowie daraus gefertigte Lichtleiter weisen hohe Flexibilität auf, da mit ihnen kleine Biegeradien realisierbar sind. Die Lichtleiter lassen sich in einfacher Weise und kostengünstig verlegen, wobei eine hohe Optimierung bei der Nutzung des zur Verfügung stehenden Verbauungsraums möglich ist.

Des Weiteren ist erfindungsgemäß vorgesehen, dass die Lichtleiter an den lichtaustrittsseitigen Enden eine Trägerplatte aufweisen, auf welchen die Glasfaserenden flächig verteilt angeordnet sind.

Es hat sich als vorteilhaft erwiesen, dass das Glasfaserbündel einen Durchmesser von 0,5 mm - 3,0 mm, vorzugsweise 1,0 mm aufweist. dass bei der herstellungstechnisch günstigen Verwendung von 280 Fasern in einem Glasfaserbündel mit jeweils einem Durchmesser vom 0,53 µm pro Glasfaser sich eine Lichtleiterdicke von etwa 1 mm ergibt.

Des Weiteren hat sich als vorteilhaft erwiesen, dass das Glasfaserbündel mit Faden aus Glas- und/oder Kevlar umwickelt ist. Die Umwickelung ermöglicht die Zusammenfassung der Glasfasern zu Glasfaserbündel und die weitere Umwicklung mit Schutzummantelung.

Alternativ oder zusätzlich zu der Umwickelung ist es möglich, oder dass das Glasfaserbündel eine Schutzummantelung aus Glasgewebe aufweist, vorzugsweise aus Glasseidengeflecht. Die Schutzummantelung bietet Schutz vor mechanischen Beschädigungen der Lichtleiter bei Einbau und Wartung insbesondere optimalen Schutz der Glasfasern vor Faserbruch.

Dabei ist weiter vorgesehen, dass der Lichtleiter einen Gesamtdurchmesser von 2,0 mm aufweist, vorzugsweise mit einem maximalen Toleranzwert von +/- 0,2 mm.

Eine weitere Ausführungsform der erfindungsgemäßen Vorrichtung wird dadurch bereitgestellt, dass der Lichtleiter wenigstens eine Einzelendhülse aufweist, in welcher das Glasfaserbündel am lichtaustrittsseitigen Ende zu der Lichtaustrittsfläche verfestigt und am Montage-Ort mit der Lichtaustrittsfläche am Beleuchtungsort in der Flugzeugkabine angeordnet, fest eingebaut ist. Die Einzelendhülse wird lose auf dem Lichtleiter angeordnet. Bei der Montage werden die Enden der Glasfasern mit der Einzelendhülse so vercrimpt, dass die Lichtaustrittsfläche am Beleuchtungsort in gewünschter Weise und in gewünschtem Abstand von der Lichteintrittsfläche angeordnet ist. Dabei ist es möglich, dass die Einzelendhülse sowohl die Glasfasern zu einer Lichtaustrittsfläche zusammenhält, als auch das Ende des Lichtleiters am Beleuchtungsort befestigt.

Des Weiteren ist von der Erfindung umfasst, eine faseroptische Vorrichtung zur funktionellen und dekorativen Innenbeleuchtung von Flugzeugkabinen mit wenigstens einer zentralen Lichtquelle und wenigstens einem faseroptischen Lichtleitersystem mit Lichtleitern zur Leitung des Lichts von der Lichtquelle zum Beleuchtungsort, wobei die Lichtleiter lichteintrittsseitig zu einer mit der Lichtquelle korrespondierenden Lichtaufnahmefläche zusammengefasst sind und die Lichtleiter wenigstens einen Einfaserlichtleitstab mit einem Durchmesser von 2-8mm, vorzugsweise 3 mm, mit Seitenlicht emittierenden Eigenschaften aufweisen, dessen Lichtaustrittsfläche als Linienlicht oder als Flächenlicht ausgebildet ist. In vorteilhafter Weise können mit dieser Ausführungsform der Erfindung robuste Linien- oder Flächenbeleuchtungen bereitgestellt werden. Die gesamte Längsseite oder vorgesehene Abschnitte des Lichtleiters dienen dabei als Lichtaustrittsfläche, über welche das Licht je nach den vorgesehenen Seitenlicht emittierenden Eigenschaften ausstrahlt. Die Seitenlicht emittierenden Eigenschaften können durch gezielte Verunreinigungen im Glasmaterial, wie beispielsweise Lufteinschlüsse, oder durch Wahl geeigneter Glasmaterialien des Einfaserlichtleitstabs bei der Herstellung beziehungsweise durch gezielte Bearbeitung der Glasoberfläche des Einfaserlichtleitstabs erzeugt werden. Die erfindungsgemäße Ausführungsform kann somit vorteilhaft zur Realisierung von Seiten- und Bodenmarkierungen, wie sie bei Wege- oder Stufenmarkierungen üblich sind, verwendet werden.

Es ist schließlich erfindungsgemäß vorgesehen, dass die zentrale Lichtquelle wenigstens eine LED umfasst. Dabei ist es möglich, die Lichtquelle außerhalb der Flugzeugkabine anzuordnen. Ebenso ist vorgesehen, dass die Lichtquelle in dafür vorgesehene Sicherheitsbehältnisse innerhalb der Flugzeugkabine montiert wird. In vorteilhafter Weise ist es möglich sowohl einzelne als auch mehrere Lichtquellen für die unterschiedlichen Beleuchtungsfunktionen in der Flugzeugkabine vorzusehen. Die Verlegung der Lichtleiter zwischen der Lichtquelle und dem Beleuchtungsort kann dabei hinter beziehungsweise auf der Kabinenwand oder in der Kabinenwand integriert erfolgen.

Es wird bevorzugt eine Lichtquelle eingesetzt, beispielsweise eine LED, welche das Lichteintrittsende der faseroptischen Vorrichtung beleuchtet. Die faseroptische Vorrichtung weist hierzu mehrere hundert bzw. je nach Ausführung und Beleuchtungsfunktion auch mehrere tausend einzelne Glasfasern mit einem typischen Einzeldurchmesser von 30 bis 100 µm auf, welche am Lichteintrittsende zu einer gemeinsamen Lichteintrittsfläche zusammengefasst sind.

Von der Lichteintrittsfläche werden die Glasfasern zu einzelnen Lichtleitern gebündelt. Die Lichtleiter dienen der Überwindung der Entfernung zwischen Lichtquelle und Beleuchtungsort. Jedem Lichtleiter ist mindestens ein Lichtaustrittsende mit einer Lichtaustrittsfläche zugeordnet. Je nach Anwendungsfall, wie beispielsweise bei einer flächenmäßig verteilten Punktlichtbeleuchtung, sind einem Lichtleiter auch mehrere Lichtaustrittsenden mit diesbezüglichen Lichtaustrittsflächen zugeordnet. Hierzu wird entweder das Glasfaserbündel des Lichtleiters weiter in Bündel mit geringerer Glasfaseranzahl aufgeteilt. Alternativ sind entsprechend gekoppelte Verteilungsstellen vorgesehen, mit denen eine Lichtverteilung von dem Lichtleiter auf mehrere nachfolgende Lichtleiter oder Glasfaserbündel erfolgt.

Am Beleuchtungsort können einzelne Glasfasern, Glasfaserbündel oder Lichtleiter gruppiert oder verteilt werden, wobei die Lichtaustrittsenden auf Trägerplatten angeordnet oder mit Streulichtplatten beziehungsweise Einzelfaserstäben gekoppelt werden können. Je nach der lichttechnischen Funktion der Lichtauskopplung am Beleuchtungsort sind so Punkt-, Linien- oder Flächenbeleuchtungen möglich, welche in vorteilhafter Weise eine gleichmäßige Ausleuchtung aufweisen.

Neben der vorbeschriebenen Lichtauskopplung kann das Lichtaustrittsende eines Lichtleiters beziehungsweise die Lichtaustrittsflächen der Glasfasern erfindungsgemäß als Flachband oder als Gewebe bzw. Geflecht gestaltet sein. Es hat sich dabei als vorteilhaft erwiesen, dass die Glasfasern des Lichtleiters selbst oder damit gekoppelte Anschlusselemente mit seitenemittierenden Eigenschaften versehen sind. Dies kann durch Oberflächenbearbeitung oder gezielte Verunreinigungen in den vorgesehenen Bereichen bei der Herstellung der Glasfasern erfolgen.

Die Lichtleiter werden im Bereich zwischen der Lichtquelle und dem Beleuchtungsort vorzugsweise als einzelne Glasfaserbündel geführt, welche in Schutzummantelungen aus temperatur- und flammbeständigen Material beispielsweise einem Glasgewebe aufgenommen sind. Das Glasfaserbündel kann dabei zuvor mit Faden aus Glas, Kevlar oder einem ähnlichen Material umwickelt sein.

Die Flexibilität der Lichtleiter mit Biegeradien der Einzelfasern im mm-Bereich sowie die geringe Biegesteifigkeit des für die Schutzummantelung vorgesehenen Glasgewebes ermöglicht eine Verlegung auch in engen Einbauverhältnissen. Hierdurch wird eine weitere Optimierung des Verbauungsraumes ermöglicht, welcher für Hinterwandeinbauten in der Flugzeugkabine zur Verfügung steht.

Die Flammbeständigkeit und die chemische Neutralität (rauchfrei bei fremdinduzierter Hitzeentwicklung) des verwendeten Glases sowie die vorteilhaften Eigenschaften von Glas in Zusammenhang mit der erfindungsgemäß vorgesehenen Schutzummantelung tragen erheblich zur Verbesserung der Sicherheit in Flugzeugkabinen bei. Mit der erfindungsgemäßen Vorrichtung können erhöhte Anforderungen von Sicherheits- bzw. Brandschutznormen für den Flugzeugbau oder Flugzeugbetrieb erfüllt werden wie beispielsweise die Norm JAR 25.869.

## Patentansprüche

1. Faseroptische Vorrichtung zur funktionellen und dekorativen Innenbeleuchtung von Flugzeugkabinen mit verbesserter Flamm- und Emissionsbeständigkeit bei Hitze mit wenigstens einer zentralen Lichtquelle und wenigstens einem faseroptischen Lichtleitersystem mit Lichtleitern zur Leitung des Lichts von der Lichtquelle zum Beleuchtungsort, wobei die Lichtleiter lichteintrittsseitig zu einer mit der Lichtquelle korrespondierenden Lichtaufnahmefläche zusammengefasst sind,
**dadurch gekennzeichnet,**
**dass** die Lichtleiter wenigstens ein mit einer Schutzummantelung aus Glasgewebe versehenes Glasfaserbündel aufweisen, dass dessen Glasfasern mit ihren lichtaustrittsseitigen Enden eine Lichtaustrittsfläche bilden und die Lichtaustrittsfläche als Punktlicht, als Linienlicht oder als Flächenlicht vorgeformt ist und/oder die Lichtleiter wenigstens einen Einfaserlichtleitstab mit einem Durchmesser von 2-8 mm, vorzugsweise 3 mm, mit Seitenlicht emittierenden Eigenschaften aufweisen, dessen Lichtaustrittsfläche als Linienlicht oder als Flächenlicht ausgebildet ist.

2. Faseroptische Vorrichtung gemäß Anspruch 1,
**dadurch gekennzeichnet,**
**dass** die Glasfasern an den lichtaustrittsseitigen Enden zu einem Lichtleitstab oder einer Leuchtplatte verpresst oder zu einem Gewebe verwoben sind.

3. Faseroptische Vorrichtung gemäß Anspruch 1 oder 2,
**dadurch gekennzeichnet,**
**dass** die Glasfasern an den lichtaustrittsseitigen Enden seitenemittierende Eigenschaften aufweisen.

4. Faseroptische Vorrichtung gemäß Anspruch 1 oder 3,
**dadurch gekennzeichnet,**
**dass** die Glasfasern einen Durchmesser in Bereich zwischen 30 µm und 100 µm aufweisen, vorzugsweise 53 µm.

5. Faseroptische Vorrichtung gemäß einem der Ansprüche 1 bis 4,
**dadurch gekennzeichnet,**
**dass** die Lichtleiter an den lichtaustrittsseitigen Enden eine Trägerplatte aufweisen, auf welchen die Glasfaserenden flächig verteilt angeordnet sind.

6. Faseroptische Vorrichtung gemäß einem der Ansprüche 1 bis 5,
**dadurch gekennzeichnet,**
**dass** das Glasfaserbündel einen Durchmesser von 0,5 mm - 3,0 mm, vorzugsweise 1,0 mm aufweist.

7. Faseroptische Vorrichtung gemäß einem der Ansprüche 1 bis 6,
**dadurch gekennzeichnet,**
**dass** das Glasfaserbündel mit Faden aus Glas- und/oder Kevlar umwickelt ist.

8. Faseroptische Vorrichtung gemäß einem der Ansprüche 1 bis 7,
**dadurch gekennzeichnet,**
**dass** das Glasfaserbündel eine Schutzummantelung aus Glasseidengeflecht aufweist.

9. Faseroptische Vorrichtung gemäß einem der Ansprüche 1 bis 8,
**dadurch gekennzeichnet,**
**dass** der Lichtleiter einen Gesamtdurchmesser von 2,0 mm aufweist, vorzugsweise mit einem maximalen Toleranzwert von +/- 0,2 mm.

10. Faseroptische Vorrichtung gemäß einem der Ansprüche 1 bis 9,
**dadurch gekennzeichnet,**
**dass** der Lichtleiter wenigstens eine Einzelendhülse aufweist, in welcher das Glasfaserbündel am lichtaustrittsseitigen Ende zu der Lichtaustrittsfläche verfestigt und am Montage-Ort mit der Lichtaustrittsfläche am Beleuchtungsort in der Flugzeugkabine angeordnet, fest eingebaut ist.

11. Faseroptische Vorrichtung gemäß einem der Ansprüche 1 bis 10,
**dadurch gekennzeichnet,**
**dass** der Einfaserlichtleitstab einen Durchmesser von 3 mm aufweist.

12. Faseroptische Vorrichtung gemäß einem der Ansprüche 1 bis 11,
**dadurch gekennzeichnet,**
**dass** die zentrale Lichtquelle wenigstens eine LED umfasst.

## Claims

1. Fiber-optic device for the functional and decorative interior lighting of airplane cabins with improved flame and emission durability at heat with at least one central light source and at least one fiber-optic light conductor system with light guides for guiding the light from a light source to a lighting location, whereby the light guides are combined on a light-inlet side to form a light-receiving surface corresponding to said light source,
**characterized by**
the light guides having at least one glass-fiber bundle with a protective sheath made of glass fabric, the glass-fibers of the glass-fiber bundle forming a light emission surface at the light-outlet side and the light-emission surface is preshaped as point light, line of light or flat light and/or the light guides comprising at least one monofiber light-guiding rod with a diameter in the range between 2 to 8 mm, preferably 3 mm, with side-light emitting properties which light-outlet side is formed as a in line light or a flat light.

2. Fiber-optic device according to claim 1,
**characterized by**
the glass fibers being pressed together at the light-outlet ends to form a light-guiding rod or a light panel or are woven to a fabric.

3. Fiber-optic device according to claim 1 or 2,
**characterized by**
the glass fibers having side-emitting properties at said light-outlet side.

4. Fiber-optic device according to claim 1 to 3,
**characterized by**
the glass fibers having a diameter in a range between 30 µm und 100 µm, preferably 53 µm.

5. Fiber-optic device according to claim 1 to 4,
**characterized by**
the light guides having a mounting board at the light-outlet side ends on which the glass fiber ends are disposed and formed as a plane.

6. Fiber-optic device according to claim 1 to 5,
**characterized by**
the glass fiber bundle having a diameter in a range between 0,5 mm - 3,0 mm, preferably 1,0 mm.

7. Fiber-optic device according to claim 1 to 6,
**characterized by**
the glass fiber bundle being wrapped around by a filament made of glass and/or Kevlar.

8. Fiber-optic device according to claim 1 to 7,
**characterized by**
the glass fiber bundle having a protection sheath made of glass-silk fabric.

9. Fiber-optic device according to claim 1 to 8,
**characterized by**
the light guide having a total diameter of 2,0 mm with a maximum tolerance value of +/- 0,2 mm.

10. Fiber-optic device according to claim 1 to 9,
**characterized by**
the light guide having at least one individual end sleeve in which said at least one glass-fiber bundle is fixedly installed at said light-outlet side end to form a light-outlet surface which is fixedly mounted at an installation location where said light-outlet surface is placed at the lighting location in the airplane cabin.

11. Fiber-optic device according to claim 1 to 10,
**characterized by**
the diameter of said monofiber lighting-rod being 3 mm.

12. Fiber-optic device according to claim 1 to 11,
**characterized by**
the central light source including at least one LED.

## Revendications

1. Dispositif à fibres optiques pour un éclairage intérieur fonctionnel et décoratif de cabines d'avions avec une résistance à la chaleur de flammes et de rayonnement améliorée, avec au moins une source de lumière centrale et au moins un système de guides de lumières à fibres optiques, avec des guides de lumière pour conduire la lumière de la source de lumière au lieu d'éclairage, les guides de lumière étant assemblés du côté de l'entrée de la lumière sur une surface réceptrice de lumière correspondant à la source de lumière, **caractérisé en ce que** les guides de lumière comprennent au moins un faisceau de fibres de verre doté d'une gaine protectrice de tissu de verre ; les fibres de verre forment une surface de sortie de la lumière avec leurs extrémités du côté de la sortie de la lumière et la surface de sortie de la lumière est préformée sous forme de lumière ponctuelle, de lumière linéaire, ou de lumière plane et/ou les guides de lumière comprennent au moins une tige guide de lumière monofibre avec un diamètre de 2-8 mm, de préférence de 3 mm, et des propriétés d'émission de lumière latérale, la surface de sortie de lumière étant sous forme de lumière linéaire ou de lumière plane.

2. Dispositif à fibres optiques selon la revendication 1, **caractérisé en ce que** les fibres de verre sont comprimées à leurs extrémités du côté de la sortie de la lumière en une tige guide de lumière ou en une plaque lumineuse ou sont tissées en un tissu de verre.

3. Dispositif à fibres optiques selon l'une des revendications 1 ou 2, **caractérisé en ce que** les fibres de verre ont des propriétés d'émission de lumière latérale à leurs extrémités du côté de la sortie de lumière.

4. Dispositif à fibres optiques selon l'une des revendications 1 ou 3, **caractérisé en ce que** les fibres de verre ont un diamètre dans une plage entre 30 µm et 100 µm, de préférence de 53 µm.

5. Dispositif à fibres optiques selon l'une des revendications 1 à 4, **caractérisé en ce que** les guides de lumière comportent à leurs extrémités du côté de la sortie de lumière une plaque de support sur laquelle les extrémités des fibres de verre sont réparties de manière plane.

6. Dispositif à fibres optiques selon l'une des revendications 1 à 5, **caractérisé en ce que** le faisceau de fibres de verre a un diamètre de 0,5 mm - 3,0 mm, de préférence de 1,0 mm.

7. Dispositif à fibres optiques selon l'une des revendications 1 à 6, **caractérisé en ce que** le faisceau de fibres de verre est enveloppé de fils de verre et/ou de Kevlar.

8. Dispositif à fibres optiques selon l'une des revendications 1 à 7, **caractérisé en ce que** le faisceau de fibres de verre comporte une gaine protectrice tissée en soie de verre.

9. Dispositif à fibres optiques selon l'une des revendications 1 à 8, **caractérisé en ce que** le guide de lumière a un diamètre total de 2,0 mm, de préférence avec une valeur de tolérance maximale de ± 0,2 mm.

10. Dispositif à fibres optiques selon l'une des revendications 1 à 9, **caractérisé en ce que** le guide de lumière comporte au moins un manchon terminal individuel, dans lequel le faisceau de fibres de verre est agrégé au niveau de l'extrémité du côté de la sortie de lumière à la surface de sortie de lumière et intégré de manière fixe sur le lieu du montage et est disposé avec la surface de sortie de lumière sur le lieu d'éclairage dans la cabine d'avion.

11. Dispositif à fibres optiques selon l'une des revendications 1 à 10, **caractérisé en ce que** la tige guide de lumière monofibre a un diamètre de 3 mm.

12. Dispositif à fibres optiques selon l'une des revendications 1 à 11, **caractérisé en ce que** la source de lumière centrale comprend au moins une DEL.
